Europäisches Patentamt

European Patent Office

Office européen des brevets

(11) Veröffentlichungsnummer: **0 187 945 B1**

# EUROPÄISCHE PATENTSCHRIFT

(45) Veröffentlichungstag der Patentschrift: **20.03.91**

(51) Int. Cl.⁵: **H04M 3/42**, H04Q 3/62

(21) Anmeldenummer: **85115485.6**

(22) Anmeldetag: **05.12.85**

(54) **Verfahren zur Zeichenübertragung zwischen einer Datenverarbeitungsanlage und einer Fernsprechvermittlungsanlage, insbesondere einer Fernsprechnebenstellenanlage.**

(30) Priorität: **17.01.85 DE 3501437**

(43) Veröffentlichungstag der Anmeldung:
**23.07.86 Patentblatt  86/30**

(45) Bekanntmachung des Hinweises auf die
Patenterteilung:
**20.03.91 Patentblatt  91/12**

(84) Benannte Vertragsstaaten:
**AT BE CH DE FR GB IT LI**

(56) Entgegenhaltungen:
**AT-B- 323 814**
**DE-A- 2 134 350**

**Telcom Report,1.Jahrgang,Heft 4,1.August 1978,München,DE.R.Fritz und M.Jäger:"Zentraler Zeichenkanal im EWS - getrennte Wege für Sprach- und Steuersignale",Seiten 226-232**

(73) Patentinhaber: **Siemens Aktiengesellschaft**
**Wittelsbacherplatz 2**
**W-8000 München 2(DE)**

(72) Erfinder: **Fey, Dieter, Dipl.-Ing.**
**Stockmannstrasse 14**
**W-8000 München 71(DE)**

EP 0 187 945 B1

## Beschreibung

Die Erfindung betrifft ein Verfahren zur Zeichenübertragung zwischen einer Datenverarbeitungsanlage und einer mit ihr zusammenwirkenden rechnergesteuerten Fernsprechvermittlungsanlage, insbesondere einer Fernsprech-Nebenstellenanlage, zwischen denen über eine Datenverbindung Zeichen übermittelt werden.

Es ist bekannt (Siehe z.B. AT-B-323 814) in Fernsprechvermittlungssystemen neben der Sprachkommunikation einen zusätzlichen Datenverkehr zu ermöglichen. Hierbei wird zunächst eine Fernsprechverbindung zu einem gewünschten Teilnehmer innerhalb derselben Vermittlungsanlage oder über eine Verbindungsleitung zu einem Teilnehmer einer anderen Vermittlungsanlage aufgebaut und nach Herstellung der gewünschten Verbindung auf Datenverkehr umgescheltet. In bestimmten Anwendungsbereichen gewinnt die Zusammenarbeit zwischen einer Fernsprechvermittlungsanlage, insbesondere zwischen einer Fernsprech-Nebenstellenanlage und einer Datenverarbeitungsanlage zunehmend an Bedeutung. Ein solcher Steuerverbund bringt für bestimmte Anwendungsfälle in vielen Verwaltungsbereichen z.B. des Groß- und Einzelhandels, des Hotelgewerbes und der Krankenhausorganisation viele Vorteile. Beispiele für die Kooperation von Kommunikationssystem und Datenverarbeitungsanlage sind die Gesprächsdatenübertragung, die Kurzdatenübertragung zur Datenverarbeitungsanlage über die Teilnehmerstation und die Übertragung von Steuerdaten aus der Datenverarbeitungsanlage an das Fernsprechvermittlungssystem. Vermittels solcher Steuerdaten kann dann beispielsweise eine Berechtigungsumschaltung einer bestimmten Nebenstelle vorgenommen werden. Im Rahmen einer Datenabfrage auch über das öffentliche Fernsprechnetz kann ein Verbindungsaufbau zu einer bestimmten Anschlußeinrichtung,z.B. zu einem Terminal erfolgen. Der Anstoß für die vermittlungstechnischen Abläufe geht dabei von der Datenverarbeitungsanlage aus. Eine solche Verbindung kann programmgesteuert zu einer festgelegten Zeit oder aufgrund einer entsprechenden Informationseingabe aufgebaut werden. Bei den automatisch aufgebauten Verbindungen handelt es sich also nicht um solche, bei denen zumindest eine Person als Informationsempfänger bzw. -übermittler beteiligt ist. Diese Verbindungen dienen jeweils der automatischen Datenabfrage unter Einbeziehung der Vermittlungstätigkeit einer Fernsprechanlage.

Es ist die Aufgabe der Erfindung, die Zeichenübertragung auf den die Datenverarbeitungsanlage mit der Vermittlungsanlage verbindenden Datenkanal zu vereinfachen. Dies wird dadurch erreicht, daß im Rahmen von in der Vermittlungsanlage durch die Datenverarbeitungsanlage initiierbaren Abläufen zumindest ein Teil der zwischen diesen Anlagen übertragenen Zeichen derart aufgebaut sind, daß der Nutzdatenabschnitt eines außerdem zumindest noch einen Steuerdatenabschnitt umfassenden Zeichens sowohl die unmittelbar für einen damit zu veranlassenden Vorgang notwendigen Informationen als auch zusätzliche Informationen über eine oder mehrere mit diesem Vorgang zusammenhängende vermittlungstechnische Abläufe und/oder sonstige Abläufe enthält.

Durch den erfindungsgemäßen Aufbau der zu übertragenden Zeichen kann durch die sich dabei ergebenden weiteren Vorteile die Leistungsfähigkeit des betreffenden Datenkanals erhöht werden. Im bestmöglichen Falle werden die für einen zu veranlassenden Auftrag insgesamt notwendigen Informationen in einem Datenpaket zusammengefaßt, so daß die im Steuerdatenabschnitt eines Zeichens enthaltene Information über die Art der im nachfolgenden Nutzdatenabschnitt enthaltenen Informationen nur einmal für diesen Auftrag verwendet wird. Durch die erfindungsgemäße Organisation eines Zeichens können somit Meldungen eingespart werden, für die auch der Steuerdatenabschnitt notwendig wäre. Da dieser im allgemeinen eine wesentlich größere Zeichenlänge als der Nutzdatenabschnitt aufweist, wird somit die zeitliche Belastung des jeweiligen Datenkanals für die Übermittlung eines Auftrages verringert.

Der von einer Datenverarbeitungsanlage zu veranlassende Vorgang kann erfindungsgemäß ein Verbindungsaufbau zwischen zwei der Vermittlungsanlage zugehörigen internen Endgeräten oder zwischen einem solchen internen Endgerät und einem externen Endgerät sein. Ein solcher von der Datenverarbeitungsanlage gesteuerter Verbindungsaufbau hat auch unabhängig von der Aufbauart der dabei zu ermittelnden Zeichen Bedeutung. Wird für einen solchen Verbindungsaufbau die voranstehend genannte Zeichenstruktur verwendet, so ist es besonders vorteilhaft im Nutzdatenabschnitt der jeweiligen Zeichen neben dem Auftragscode die Information über die Rufnummern der jeweils miteinander zu verbindenden Endgeräte und gleichzeitig als zusätzliche Information Angaben über die zeitliche Dauer des jeweils anzulegenden Rufsignals unterzubringen. Dadurch, daß die Zeitdauer eines bestimmten vermittlungstechnischen Vorgangs festgelegt wird, können einzelne.Meldungen, die jeweils den Beginn bzw. das Ende des Vorganges bestimmen, unterbleiben. Es wird das Setzen von Zeitgliedern, die von der entsprechenden Applikation verwaltet werden müssen, vermieden. Ohne Aufwand in der Vermittlungsanlage kann im Falle der Festlegung der Rufdauer diese individuell für jedes Endgerät innerhalb einer vorgegebenen minimalen und maximalen Zeitspanne bestimmt werden.

Gemäß einer Weiterbildung der Erfindung enthält ein Nutzdatenabschnitt zusätzlich noch eine Information über die Art der die initiierten Abläufe quittierenden Rückinfortionen. Aufgrund einer solchen Rückinformation kann die Datenverarbeitungsanlage über den Stand des Verbindungsprozesses informiert werden, so daß auch aufgrund zwischenzeitlich eingetroffener Ereignisse ein gestarteter Verbindungsprozeß abgebrochen werden kann. Die Datenverbindung kann über eine als Stand- oder Wählleitung ausgebildete Leitungsverbindung erfolgen.

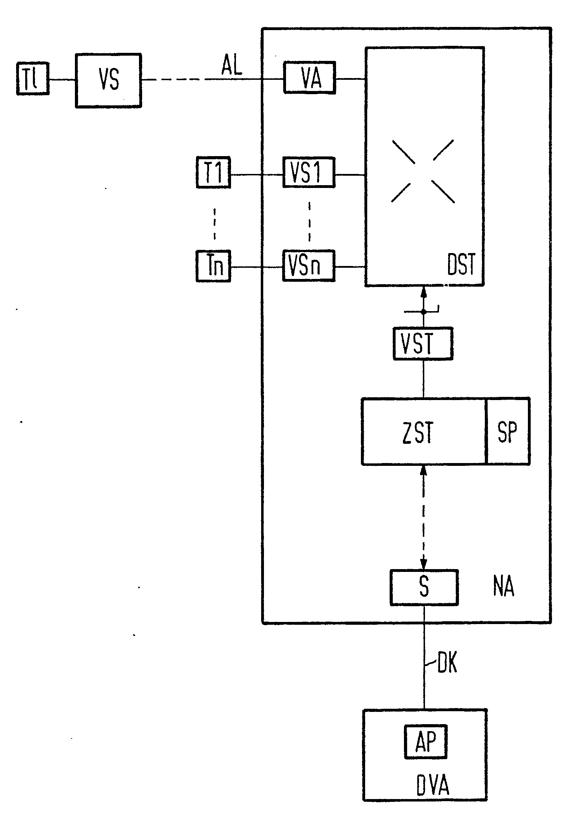

Das erfindungsgemäße Verfahren wird anhand eines in der Figur dargestellten Ausführungsbeispiels, das nur die zum Verständnis erforderlichen Einzelheiten zeigt, erläutert. Es sind in einem stark vereinfachten Blockschaltbild Teile einer Nebenstellenanlage NA dargestellt, die beispielsweise eine rechnergesteuerte speicherprogrammierte Vermittlungsanlage sein kann. Die zentrale Steuereinrichtung ZST steuert im wesentlichen die für die einzelnen Betriebsmöglichkeiten der Anlage erforderlichen Abläufe. Dabei greift sie auf entsprechende Programmteile zurück, die in der ihr zugeordneten Speichereinrichtung SP abgespeichert sind. Mit VSt ist eine Verteilersteuerung und mit DST eine dezentrale Steuerung, der jeweils eine bestimmte Anzahl von Einrichtungen, wie beispielsweise Teilnehmerstellen T1 bis Tn zugeordnet sind, bezeichnet. Unter der Voraussetzung eines digitalen Vermittlungssystemes ist diese dezentrale Teilsteuerung DST funktionsmäßig ein rechnergesteuerter Speicherbereich, in dem die digitalen Sprachsignale eingespeichert und zum jeweiligen Verbindungspartner ausgelesen werden. Sie stellt also das digitale Koppelnetz dar. Die Einheit VSt ist eine spezielle Verteiler-und Anpassungssteuerung, um mehrere dezentrale Teilsteuerungen, DST, an die jeweils Sätze angekoppelt sind, bedienen zu können. So erfolgt beispielsweise die Anschaltung der Teilnehmerstellen T1 bis Tn über die Sätze VS1 bis VSn. Über ein Amsleitungsbündel bzw. über eine Amtsleitung AL ist die Nebenstellenanlage NA mit einer externen Anlage, beispielsweise der Vermittlungsanlage VS des öffentlichen Netzes, verbunden. Stellvertretend für die daran angeschlossenen Endgeräte ist als Endgerät die Teilnehmerstelle Te dargestellt. Der weiterführenden Leitung AL bzw. dem weiterführenden Leitungsbündel ist ein Vermittlungssatz VA zugeordnet. Die insgesamt dargestellten Vermittlungssätze der Nebenstellenanlage können als aktive Sätze ausgebildet sein, die einen Prozessor beinhalten. Durch diesen wird dann eine gewisse Vorverarbeitung der z.B. von den in einem Teilnehmersatz enthaltenen Indikationsstellen gelieferten Informationen durchgeführt. Die Schnittstelle zwischen den Sätzen und der Einheit DST ist mehradrig, wobei sie im digitalen System für digitale Sprachsignale und für Steuersignale durchgängig ist.

Die Nebenstellenanlage NA ist über einen Datenkanal DK mit einem Verarbeitungsrechner in Form einer Datenverarbeitungsanlage DVA verbunden. In der Nebenstellenanlage ist als Abschluß des Datenkanals die entsprechende Schnittstellenschaltung S vorhanden, über die dann der Zugriff zu der in der Einheit ZST enthaltenen zentralen vermittlungstechnischen Steuerung erfolgt. Als Verarbeitungsrechner kann neben der kommerziellen Datenverarbeitungsanlage ein Bürokomputer oder auch ein Minikomputer eingesetzt werden. Vermittels der entsprechenden Anwendeprogramme, deren Vorhandensein in der Datenverarbeitungsanlage durch die Einheit AP angedeutet ist, besteht die Möglichkeit Verbindungen in der Nebenstellenanlage NA zwischen zwei Endgeräten aufzubauen umzukoppeln bzw. auszulösen. In gleicher Weise können dann Verbindungen zu einem externen Endgerät TE hergestellt werden. Der durch die Datenverarbeitungsanlage DVA initiierte Verbindungsaufbau zwischen zwei Endgeräten kann beispielsweise selbsttätig zu vorgegebenen Zeiten erfolgen. Ein Anwendungsfall wäre der Weckdienst, bei dem eine Teilnehmerstelle mit einer als die andere Teilnehmerstelle zu betrachtenden Anzeigeeinrichtung verbunden wird.

Insbesondere im Hinblick auf diejenigen Anwendungsfälle, in denen eine Vielzahl von derartigen Verbindungen durch die Datenverarbeitungsanlage aufgebaut werden sollen, wird durch eine besondere Struktur der von der Datenverarbeitungsanlage zu der Nebenstellenanlage NA übermittelten Kommandos bzw. Zeichen die Leistungsfähigkeit des Datenkanals DK wesentlich erhöht. Das den Verbindungsaufbau einleitende Zeichen enthält in seinem Nutzdatenabschnitt Informationen, die verschiedene mit diesem Verbindungsaufbau zusammenhängende Vorgänge betreffen. Bei einem durch die Datenverarbeitungsanlage DVA gesteuerten Verbindungsaufbau zwischen zwei internen Sprach-Endgeräten oder einem internen und einem externen Endgerät kann das von der Anwendung der Datenverarbeitungsanlage gesendete Kommando in seinem Nutzdatenabschnitt, beispielsweise folgendermaßen strukturiert sein: Nach einem Satzkennzeichen, das die durch die entsprechende Applikation aufzurufenden Programme festlegt, folgt der Auftragscode. Damit wird festgelegt, welche Verbindungsart notwendig ist. Neben der Möglichkeit, in der Nebenstellenanlage NA Sprachverbindungen zwischen zwei Teilnehmern aufzubauen und wieder auszulösen kann auch zu einem dritten Teilnehmer eine Rückfrageverbindung aufgebaut und wieder zurückgenommen werden. Es besteht auch die Möglichkeit gleich zu einem dritten Endgerät umzukoppeln. Nach dem jeweils eine dieser genannten Möglichkeiten festlegenden Auftragscode kann sich eine als Referenz zu bezeichnende Information anschließen. Diese Referenz wird dann in die zur Datenverarbeitungsanlage gesendeten Quittung übernommen. Damit kann dann diese eindeutig dem jeweils gegebenen Kommando zugeordnet werden. Unter der Voraussetzung eines Verbindungsaufbaus können dann im Nutzdatenabschnitt die Rufnummern der Endgeräte, zwischen denen diese Verbindung hergestellt werden soll, folgen. In dem Verbindungskommando sind dann als Abschluß des Nutzdatenabschnittes die maximale Rufzeit für die beiden Endgeräte bzw. in den Fällen, in denen das andere Endgerät einen Automat, wie z.B. eine Ansageeinrichtung darstellt für nur ein Endgerät enthalten.Meldet sich der Teilnehmer nicht innerhalb dieser vorgegebenen Zeit, so wird die Ausführung des Kommandos abgebrochen und entsprechend negativ quittiert. Dadurch, daß man in ein und demselben Kommando die Rufzeiten, die auch für jede der zu rufenden Teilnehmerstellen unterschiedlich festgelegt werden können, mitgibt, sind keine Einzelmeldungen über den Beginn und das Ende des Rufsignales erforderlich. Die Anzahl der für einen bestimmten Vorgang notwendigen Meldungen wird also verringert. Dies hat insbesondere in denjenigen Anwendungsfällen Vorteile, bei denen eine Vielzahl von Verbindungen hergestellt werden muß. Dies ist beispielsweise bei der Abwicklung des Weckdienstes bei einem Hotelbetrieb der Fall. Das eine der beiden Endgeräte zwischen denen dabei eine Verbindung hergestellt wird, ist ein Ansagegerät.

Für einen Verbindungsauftrag ist der Inhalt des entsprechenden Kommandos so erschöpfend, daß keine zweite Meldung erforderlich ist, um die Verbindung weiter zu steuern. Die Rufdauer für die miteinander zu verbindenden Teilnehmerstellen kann von der Applikation der Datenverarbeitungsanlage individuell vorgegeben werden, ohne daß von dieser Zeitglieder verwaltet werden müssen. Für die Verbindungen, die gesteuert durch die Datenverarbeitungsanlage DVA aufgebaut oder umgekoppelt werden, sind weiterführend alle übrigen Teilnehmerproduzuren möglich. Die Verbindung kann aufgebaut werden,wenn sich beispielsweise beide Teilnehmerstellen im Ruhezustand befinden, die eine Teilnehmerstelle in einem sogenannten Wartezustand ist oder sich zuvor im Gespräch mit einer anderen Teilnehmerstelle befunden hat, die während der durch die Datenverarbeitungsanlage initialisierten Verbindung als gehaltene Teilnehmerstelle in einem Rückfragezustand gebracht wird. Die Datenverarbeitungsanlage kann aus einer Rückfrageverbindung heraus den rückgefragten Teilnehmer mit dem gehaltenen Teilnehmer verbinden und den rückfragenden Teilnehmer auslösen.

Für diese und weitere Prozeduren sind dann jeweils bestimmte, ziffernmäßig darzustellende Kommandos im jeweiligen Nutzdatenabschnitt des von der Datenverarbeitungsanlage zur Nebenstellenanlage übermittelten Zeichens enthalten.

Vor der Absendung eines Zeichens ist die Nebenstellenanlage für derartige Zeichen empfangsbereit zu schalten. Die Applikation der Datenverarbeitungsanlage initiiert die Steuerung eines Verbindungsaufbaus bzw. Verbindungsabbaus durch Absenden einer aus dem Kommandovorrat ausgewählten Verbindungs-, Umkoppel- oder Auslöseanforderung. Die Veranlassung eines Verbindungsaufbaus bzw. Verbindungsabbaus wird vom Vermittlungssystem NA quittiert. Die Quittung enthält Informationen über den Erfolg der jeweiligen Anforderung oder Informationen über den Grund für das Nichtzustandekommen einer angeforderten Internbzw. Externverbindung. Die Datenverarbeitungsanlage kann beispielsweise über das Rufen des A-Teilnehmers, das Abheben des A-Teilnehmers und das Rufen B-Teilnehmers und über die Herstellung der Verbindung zwischen den betreffenden Teilnehmerstellen informiert werden. Zur Entlastung des Datenkanals DK können auch in einer anderen Quittungsvariante, die im Satzkennzeichen des Nutzdatenabschnittes des übertragenen Zeichens festgelegt wird, Quittungen unterdrückt werden. Es kann beispielsweise lediglich die Quittung, daß die Verbindung zwischen den betreffenden Teilnehmerstellen hergestellt ist, erfolgen.

## Ansprüche

1. Verfahren zur Zeichenübertragung zwischen einer Datenverarbeitungsanlage und einer mit ihr zusammenwirkenden rechnergesteuerten Fernsprech-Vermittlungsanlage, insbesondere einer Fernsprech-Nebenstellenanlage, zwischen denen über eine Datenverbindung Zeichen übermittelt werden, wobei ein Zeichen neben einem Nutzabschnitt zumindest noch einem Steur abshnitt umfaßt, **dadurch gekennzeichnet,** daß im Rahmen von in der Vermittlungsanlage (NA) durch die Datenverarbeitungsanlage (DVA) initiierbaren Abläufen zumindest ein Teil der zwischen diesen Anlagen übertragenen Zeichen derart aufgebaut ist, daß der Nutzdatenabschnitt eines Zeichens sowohl die unmittelbar für einen damit zu veranlassenden Vorgang notwendigen Informationen als auch zusätzliche Information über eine oder mehrere mit diesem Vorgang zusammenhängende vermittlungstechnische Abläufe und/oder sonstige Abläufe enthält.

2. Verfahren nach Patentanspruch 1, **dadurch gekennzeichnet,** daß die zusätzlichen Informationen im Nutzdatenabschnitt eines Zeichens den jeweiligen Vorgang betreffende Zeitinformationen darstellen.

3. Verfahren nach Patentanspruch 1 oder 2, **dadurch gekennzeichnet,** daß der von der Datenverarbeitungsanlage (DVA) zu veranlassende Vorgang ein Verbindungsaufbau zwischen zwei der Vermittlungsanlage (NA) zugehörigen internen Endgeräten (T1, Tn) oder zwischen einem solchen internen Endgerät (T1) und einem externen Endgerät (Te) darstellt.

4. Verfahren nach Patentanspruch 2 oder 3, **dadurch gekennzeichnet,** daß bei Veranlassung eines zwischen zwei Endgeräten vorzunehmenden Verbindupgsaufbaus ein Nutzdatenabschnitt neben dem Auftragscode aus der Information über die Rufnummern der jeweils miteinander zu verbindenden Endgeräte und weiterhin aus der Angabe über die zeitliche Dauer des jeweils anzulegenden Rufsignals besteht.

5. Verfahren nach Patentanspruch 4, **dadurch gekennzeichnet,** daß die zeitliche Dauer des jeweiligen Rufsignals getrennt für jedes Endgerät (T1, Tn),zwischen denen eine Verbindung herzustellen ist,innerhalb einer vorgegebenen minimalen und maximalen Zeitspanne über das Eingabe-Terminal der Datenverarbeitungsanlage (DVA) flexibel festlegbar ist.

6. Verfahren nach Patentanspruch 4, **dadurch gekennzeichnet,** daß ein Nutzdatenabschnitt zusätzlich noch eine Information über die Art der die initiierten Abläufe quittierenden Rückinformation enthält.

7. Verfahren nach Patentanspruch 1, **dadurch gekennzeichnet,** daß die Datenverbindung über eine als Stand- oder Wählleitung ausgebildete Leitungsverbindung (DK) verläuft.

## Claims

1. Method of transmitting signals between a data processing system and a co-operating, computer-controlled telephone exchange system, in particular a private branch exchange system, between which signals are transmitted via a data link, a signal comprising, in addition to a user section, at least one control section also, characterized in that, within the scope of procedures which can be initiated in the exchange system (NA) by the data processing system (DVA), at least part of the signals transmitted between these systems are constructed in such a manner that the user data section of a signal contains both the items of information which are directly required for an operation to be thereby initiated and also additional items of information relating to one or more switching procedures associated with this operation, and/or to other procedures.

2. Method according to Patent Claim 1, characterized in that the additional items of information in the user data section of a signal represent items of time information relating to the operation in question.

3. Method according to Patent Claim 1 or 2, characterized in that the operation which is to be initiated by the data processing system (DVA) represents a connection establishment between two internal terminals (T1, Tn) assigned to the exchange system (NA) or between one such internal terminal (T1) and an external terminal (Te).

4. Method according to Patent Claim 2 or 3, characterized in that when a connection establishment which is to take place between two terminals is initiated, a user data section consists, not only of the job code, but also of the information relating to the call numbers of the terminals which are to be connected to one another in each case, and furthermore of the specification relating to the time duration of the ringing signal which is to be applied in each case.

5. Method according to Patent Claim 4, characterized in that the time duration of the ringing signal in question can be flexibly defined separately for each terminal (T1, Tn) between which a connection is to be established, within a predetermined minimum and maximum time interval, via the input terminal of the data processing system (DVA).

6. Method according to Patent Claim 4, characterized in that a user data section additionally contains a further item of information relating to the nature of the return information which acknowledges the initiated procedures.

7. Method according to Patent Claim 1, characterized in that the data link runs over a line connection (DK) which represents a dedicated line or a switched line.

## Revendications

1. Procédé pour la transmission de signaux entre une installation de traitement de données et une installation de communication téléphonique coopérant avec l'installation de traitement de données et commandée par un ordinateur, notamment une installation téléphonique à postes secondaires, des signaux devant être retransmis entre ces installations au moyen d'une liaison de données, et un signal comportant, en dehors d'une section utile, également au moins une section de commande, caractérisé par le fait que, dans le cadre de cycles pouvant être déclenchés dans le central téléphonique (NA) par l'installation de traitement de données (DVA), au moins une partie des signaux transmis par ces installations est constituée de telle sorte que la section de données d'un signal contient aussi bien les informations nécessaires pour un processus devant être déclenché par un tel signal, que des informations supplémentaires concernant un ou plusieurs cycles techniques de commutation associés à ce processus, et/ou d'autres cycles.

2. Procédé suivant la revendication 1, caractérisé par le fait que les informations supplémentaires situées en sections de données utiles d'un signal représentent des informations de temps nécessaires pour le processus respectif.

3. Procédé suivant la revendication 1 ou 2, caractérisé par le fait que le processus, qui doit être déclenché par l'installation (DVA) de traitement des données, représente l'établissement d'une liaison entre deux appareils terminaux internes (T1, Tn), associés à l'installation de commutation (NA), ou bien entre un tel appareil terminal interne (T1) et un appareil terminal externe (Te).

4. Procédé suivant la revendication 2 ou 3, caractérisé par le fait que lors du déclenchement de l'établissement d'une liaison devant être établie entre deux appareils terminaux, une section de données utiles est constituée, en dehors du code d'enregistrement, par l'information constituant les numéros d'appel des appareils terminaux devant être réunis respectivement entre eux, et en outre par l'indication de la durée dans le temps du signal d'appel devant être respectivement appliqué.

5. Procédé suivant la revendication 4, caractérisé par le fait que la durée dans le temps du signal d'appel respectif peut être fixée de façon souple, séparément pour chacun des appareils terminaux (T1, Tn) entre lesquels on peut établir une liaison, au cours d'un intervalle de temps minimum et maximum prédéterminé, par l'intermédiaire du terminal d'entrée de l'installation de traitement de données (DVA).

6. Procédé suivant la revendication 4, caractérisé par le fait qu'une section de données utiles contient en outre en supplément une information concernant le type de l'information de renvoi, qui doit accuser réception des cycles déclenchés.

7. Procédé suivant la revendication 1, caractérisé par le fait que la liaison de transmission de données s'effectue par un terminal d'un connecteur de ligne (DK) réalisé sous la forme d'une ligne spécialisée ou d'une ligne de sélection.

Tl — VS — — — AL — VA

DST

T1 — VS1

Tn — VSn

VST

ZST | SP

S    NA

DK

AP

DVA